# EUROPEAN PATENT APPLICATION

(11) **EP 4 841 222 A1**
(43) Date of publication of application: **18.11.2026**
(21) Application number: 25176776.0
(22) Date of filing: 15.05.2025
(51) Int. Cl.: G01J 3/02, G01J 3/42, G01J 3/46, G01J 3/52, G01N 21/25, G01J 5/06, G01J 5/08, G01J 5/12

(54) **SPECTROPHOTOMETER WITH A TEMPERATURE SENSING DEVICE**

(71) Applicant: X-Rite Europe GmbH, 8105 Regensdorf (CH)
(72) Inventor: Gonzalez Marin, Juan Francisco, CH-8105 Regensdorf (CH); Ehbets, Peter, CH-8105 Regensdorf (CH); Wegmüller, Mark, CH-8105 Regensdorf (CH); Adby, Matthew, CH-8105 Regensdorf (CH)
(74) Representative: Detken, Andreas

(57) **Abstract**

A spectrophotometer (1) comprises a sample illumination light source (10) configured to emit sample measurement light, a sample measurement light detection unit (3) for obtaining a wavelength-dependent sample reflectance profile based on a portion of the sample measurement light reflected from a sample (S), a temperature sensing device (5) for measuring a sample temperature, a user interface (8), and a processing unit (3) that comprises a thermochromism reference data acquisition mode, wherein in the thermochromism reference data acquisition mode, the processing unit (3) is configured to output instructions via the user interface (8), wherein the instructions comprise a sample treatment instruction to heat or cool a reference sample, and a measurement instruction to acquire a wavelength-dependent sample reflectance profile at different sample temperatures while the reference sample is heating up or cooling down to obtain thermochromism reference data.

## Description

### TECHNICAL FIELD

The present invention relates to a spectrophotometer with a temperature sensing device for measuring a sample temperature to enable thermochromism correction, a measurement setup comprising said spectrophotometer, a color measurement network system comprising at least one of said spectrophotometers, and a calibration method for calibrating the spectrophotometer.

### PRIOR ART

Precise color measurements are required during many manufacturing processes in various industrial fields. A spectrophotometer is a device which enables such color measurements by providing a wavelength-dependent reflectance profile as a "fingerprint" of the color of a sample. This wavelength-dependent reflectance profile may be temperature-dependent, i.e. the sample may change its color as a function of temperature - an effect which is referred to as thermochromism.

In order to be able to take thermochromic effects into account, the temperature of the sample needs to be known.

US2024280408A1 discloses a colorimeter with a surface temperature measuring apparatus that can measure the temperature of the surface of a measurement target simultaneously with the color measurement. The surface temperature measuring apparatus includes a radiation thermometer and a temperature correcting section. The radiation thermometer measures a surface temperature (Tm) of a measurement range larger than a measurement target region of the measurement target. A second temperature measuring means measures a surface temperature (Tn) of a region outside the measurement target region of the measurement target but within the measurement range of the radiation thermometer and the correcting section corrects the surface temperature (Tm) that is measured using the surface temperature (Tn) to obtain the surface temperature (T) of the measurement target.

In practice, e.g. in a production line, samples often need to be measured and compared to a pre-defined reference sample (also called a "standard") to check whether their color meets the requirements. The temperature at which these measurements are carried out may differ from a temperature at which the reference sample was measured. If the color of the pre-defined reference sample was determined at a reference temperature which does not match a temperature at which the sample is currently measured, color measurement errors affecting the accuracy of the comparison are likely to occur, which may render the comparison useless.

### SUMMARY OF THE INVENTION

In a first aspect, it is an object of the present invention to provide a spectrophotometer which enables reliable color measurements of thermochromic samples for which there is no suitable pre-existing reference data.

This object is achieved by a spectrophotometer as claimed in claim 1. Further embodiments of the invention are laid down in the dependent claims.

A spectrophotometer is provided, comprising:
a sample illumination light source configured to emit sample measurement light;
a sample measurement light detection unit for obtaining a wavelength-dependent sample reflectance profile based on a portion of the sample measurement light reflected from a sample;
a temperature sensing device for measuring a sample temperature;
a user interface, and
a processing unit that comprises a thermochromism reference data acquisition mode,
wherein in the thermochromism reference data acquisition mode, the processing unit is configured to output instructions via the user interface, wherein the instructions comprise
a sample treatment instruction to heat or cool a reference sample, and
a measurement instruction to acquire a wavelength-dependent sample reflectance profile at different sample temperatures while the reference sample is heating up or cooling down to obtain thermochromism reference data.

The user interface may in particular comprise a display, e.g. configured as a touch screen, or a screen combined with one or more push-buttons.

Additionally or alternatively, the user interface may be configured to transfer the instructions to an external display, in particular using a wired or a non-wired connection.

Such a thermochromism reference data acquisition mode that guides a user via a sample treatment instruction and a measurement instruction enables the acquisition of thermochromism reference data in a fast and standardized manner, which then enables the creation of a reliable reference database, and thus increases the accuracy of the color measurements that can be performed by the spectrophotometer.

In the thermochromism reference data acquisition mode, the processing unit may be further configured to determine a fitting function based on the wavelength-dependent sample reflectance profiles obtained as a function of the sample temperature.

To support the user in assessing whether the acquisition of the thermochromism reference data was successful, the processing unit may be further configured to:
calculate a quality parameter quantifying a quality of the fitting function,
optionally, determining if the quality parameter exceeds a pre-determined quality threshold, and
optionally, outputting a quality warning via the user interface if the quality parameter exceeds the pre-determined quality threshold.

The fitting function may be computed based on a linear regression or a nonlinear regression, in particular nonlinear polynomial regression, or may be based on a look-up table. The quality parameter may in particular be a root mean square error (RMSE) or mean squared error (MSE) determined based on the fitting function and the wavelength-dependent sample reflectance profiles obtained as a function of the sample temperature.

In a second aspect, it is an object of the present invention to provide a spectrophotometer which enables accurate color measurements of thermochromic samples.

A spectrophotometer is thus provided, comprising:
a sample illumination light source configured to emit sample measurement light;
a sample measurement light detection unit for obtaining a wavelength-dependent sample reflectance profile based on a portion of the sample measurement light reflected from a sample;
a temperature sensing device for measuring a sample temperature;
a user interface, and
a processing unit that comprises a thermochromism-corrected measurement mode for measuring a measurement sample,
wherein in the thermochromism-corrected measurement mode, the processing unit is configured to access thermochromism reference data, in particular thermochromism reference data that has been acquired using a spectrophotometer having a thermochromism reference data acquisition mode as described above, and to calculate a thermochromism-corrected sample reflectance profile for the measurement sample based on the sample temperature, the wavelength-dependent sample reflectance profile obtained by the sample measurement light detection unit, and the thermochromism reference data.

The first and second aspect may of course be combined. In particular, the processing unit may be configured to be switchable at least between the thermochromism reference data acquisition mode described above and the thermochromism-corrected measurement mode for measuring a measurement sample.

In the thermochromism-corrected measurement mode, the processing unit may be further configured to calculate a color difference between a sample color derived from the wavelength-dependent sample reflectance profile obtained by the sample measurement light detection unit, and a reference color, wherein either the sample color or the reference color have been corrected based on the thermochromism reference data and the sample temperature, and to output a color difference warning signal via the user interface if the color difference exceeds a pre-determined color difference threshold.

Preferably, the warning signals mentioned in the present disclosure are visual warning signals, e.g. symbols and/or text strings, which are preferably displayed on a display of the user interface.

The processing unit maybe further configured to be switchable to a non-corrected measurement mode for measuring a measurement sample, in which the processing unit is configured to output the wavelength-dependent sample reflectance profile obtained by the sample measurement light detection unit without taking into account the sample temperature. Such a non-corrected measurement mode is useful if the user purposefully would like to obtain non-corrected data.

In the non-corrected measurement, the processing unit may be further configured to output an activation warning signal via the user interface to indicate that thermochromism correction is not activated in order to prevent inadvertent acquisition of non-corrected data.

Additionally or alternatively, in order to support a user in deciding whether thermochromism correction should be carried out to obtain more accurate measurement results, in the non-corrected measurement mode, the processing unit may be further configured to:
a) access a prediction model that is based on thermochromism reference data, in particular based on thermochromism reference data that has been acquired using a spectrophotometer as described herein,
   predict that the measurement sample is thermochromic based on the wavelength-dependent sample reflectance profile of the measurement sample and the prediction model, and
   output a thermochromism warning signal via the user interface to indicate that the measurement sample is thermochromic, and/or
b) predict that the measurement sample is thermochromic based on color coordinates derived from the wavelength-dependent sample reflectance profile of the measurement sample, and
   output a thermochromism warning signal via the user interface to indicate that the measurement sample is thermochromic.

In option a), the prediction model may be developed and trained using machine learning. In particular, it may be trained to find a relation between a strength of the thermochromism effect (color change per unit temperature) and one or more parameters that can be extracted from a fit of the wavelength-dependent reflectance profile or its derivative as a function of wavelength.

In a third aspect, it is an object of the present invention to provide a spectrophotometer which enables measurements of a surface temperature of a sample in an accurate and simple manner.

A spectrophotometer is provided, comprising:
a sample illumination light source configured to emit sample measurement light;
an enclosure which defines a sample port with a sample aperture through which the sample can be illuminated when the spectrophotometer is placed on the sample;
a sample measurement light detection unit for obtaining a wavelength-dependent sample reflectance profile based on a portion of the sample measurement light reflected from the sample;
a thermal infrared sensor device having a field-of-view which covers at least a portion of the sample aperture, wherein the thermal infrared sensor device is configured to output an output signal that depends on a surface temperature of a surface that is within its field-of-view;
a processing unit configured to derive a sample temperature from the output signal of the thermal infrared sensor device,
wherein the thermal infrared sensor device is thermally connected to a portion of the enclosure which surrounds the sample aperture so as to be in thermal equilibrium with the portion of the enclosure surrounding the sample aperture.

In particular, the output signal of the thermal infrared sensor device may depend on a sensor temperature measured within the thermal infrared sensor device itself.

The output signal of the thermal infrared sensor device may in particular be a voltage signal that depends on an emissivity of the surface that is within the field-of-view of the thermal infrared sensor device.

In particular, the portion of the enclosure which surrounds the sample aperture may be covered by the field-of-view of the thermal infrared sensor device. In other words, when placed on a sample to perform a measurement, the thermal infrared sensor device may see a combination of the sample surface and a portion of the enclosure.

By thermally connecting the thermal infrared sensor device to the portion of the enclosure which surrounds the sample aperture, it is ensured that both are kept at the same temperature, which facilitates the derivation of the sample temperature from the output signal of the thermal infrared sensor device, since the influence of the enclosure gets cancelled.

The thermal connection may be provided by a coupling piece, preferably made of a metal, via which the thermal infrared sensor device is attached to the enclosure. In particular, the coupling piece may be configured to receive the thermal infrared sensor device. The coupling piece may be removably attached to the enclosure or may be formed as a part of the enclosure.

The thermal infrared sensor device may in particular comprise a bulk portion and a thermopile sensing unit. The thermopile sensing unit preferably comprises multiple thermocouples connected in series and an infrared absorber layer which is configured to absorb thermal radiation. The thermocouples may each have a first junction, also called "hot" junction, connected to the infrared absorber layer, and a second junction, also called "cold" junction, connected to the bulk portion of the thermal infrared sensor device. The thermal infrared sensor device preferably further comprises a built-in reference temperature sensor, which is configured to measure a temperature of the bulk portion of the thermal infrared sensor device as the sensor temperature used to derive the sample temperature. Each individual thermocouple may exhibit a thermocouple voltage that is proportional to a temperature difference between the first junction and the second junction as a consequence of the Seebeck effect. The output signal of the thermal infrared sensor device may then in particular be a total output voltage that is equal to a sum of the voltages across the individual thermocouples in the thermopile sensing unit.

The spectrophotometer may comprise any of the features mentioned in the context of the first and/or second aspect discussed above, i.e. the processing unit may comprise and be switchable between a thermochromism reference data acquisition mode and/or a thermochromism-corrected measurement mode, and/or a non-corrected measurement mode as described above.

Furthermore, the spectrophotometer may comprise a port reducer, which is placeable at the sample port to reduce an aperture size of the sample aperture. Such a port reducer may be required if the sample is small or if it is inhomogeneous and therefore only a specific portion of the sample is to be measured. In order to minimize its influence on the temperature measurement carried out by the thermal infrared sensor device, the port reducer preferably exhibits an emissivity which preferably smaller than 0.2. In particular, the port reducer may be at least partially made of a polished metal, preferably polished stainless steel. Thus, even if a portion of the port reducer lies within the field-of-view of the thermal infrared sensor device, its contribution to the temperature measurement due to thermal emission is negligible, since it scales with the emissivity. Materials characterized by low emissivity typically exhibit high reflectivity. Preferably, the region of the enclosure whose emitted radiation is reflected by the port reducer and subsequently absorbed by the thermal infrared sensor, is thermally coupled to the thermal infrared sensor.

The spectrophotometer may further comprise an insulation structure that is arranged at the sample port to minimize heat exchange between the spectrophotometer and the sample, i.e. to ideally prevent the spectrophotometer from influencing the temperature of the sample.

The insulation structure may comprise an insulation layer comprising or consisting of an insulating material, e.g. rubber or polytetrafluoroethylene (PTFE) that is in contact with the sample when the spectrophotometer is placed on the sample to carry out a measurement.

Alternatively or additionally, the insulation structure may comprise at least one spacer element, e.g. a spacer ring or spacer feet, arranged at a distance of the sample aperture, wherein the at least one spacer element protrudes from a bottom surface of a housing of the spectrophotometer such that an insulating air gap occurs between the spectrophotometer and a portion of the sample which is directly positioned under the aperture when the spectrophotometer is placed on the sample.

The thermal infrared sensor device preferably defines a measurement axis which traverses a cavity defined by the enclosure and forms a temperature measurement angle with respect to a device normal that is perpendicular to the sample aperture. The temperature measurement angle may in particular be 30°.

In order to prevent thermal radiation from entering the cavity defined by the enclosure and potentially getting reflected by the sample into the thermal infrared sensor device, which may falsify the temperature measurement, the enclosure preferably does not have any holes arranged under an angle that is equal but opposite to the temperature measurement angle with respect to the device normal. Preferably, the thermal infrared sensor device is furthermore thermally connected to a portion of the enclosure which surrounds the angle that is equal but opposite to the temperature measurement angle so as to be in thermal equilibrium with said the portion of the enclosure. In some embodiments, the entire enclosure may be in thermal equilibrium with the thermal infrared sensor device.

The enclosure may be an integrating sphere for diffusing the sample measurement light. Alternatively, the enclosure may be a scaffolding which has a polygonal shape.

In a further aspect, a calibration method for temperature-calibration of a spectrophotometer that comprises a thermal infrared sensor device is provided, the calibration method comprising:
providing a first calibration sample with a pre-determined emissivity and a pre-determined first surface temperature;
obtaining a measured first surface temperature of the calibration sample with the thermal infrared sensor device of the spectrophotometer;
calculating a fraction of the field-of-view of the thermal infrared sensor device of the spectrophotometer that overlaps with the sample aperture based on the measured first surface temperature, the pre-determined first surface temperature of the calibration sample and the pre-determined emissivity of the calibration sample.

In order to validate the calibration and improve its accuracy, the calibration may further comprise:
providing a second calibration sample with a pre-determined emissivity and a pre-determined second surface temperature or setting the first calibration sample to a pre-determined second surface temperature;
obtaining a measured second surface temperature of the calibration sample with the thermal infrared sensor device of the spectrophotometer, wherein the measured second surface temperature is obtained by taking into account the calculated fraction of the field-of-view that overlaps with the sample aperture;
calculating a temperature offset between the pre-determined second temperature and the measured second surface temperature.

In a further aspect, a measurement setup is provided, comprising:
a spectrophotometer according to any of the aspects described above, wherein the spectrophotometer has an acquisition rate at which wavelength-dependent sample reflectance profiles can be acquired, and
a sample holder, wherein the sample holder exhibits a thermal mass and a thermal resistance defined such that the temperature of the sample between each acquisition at the acquisition rate changes by less than 15°C.

Preferably, the sample holder comprises or consists of a material with high thermal conductivity, e.g. aluminum and/or copper.

Such a sample holder facilitates the acquisition of measurements at different sample temperatures, since it prevents the sample from e.g. cooling down or heating up too quickly, thus allowing for sufficient data points to be acquired given the acquisition rate of the spectrophotometer, e.g. to obtain useful thermochromism reference data.

In a further aspect, a color measurement network system is provided, comprising:
at least one spectrophotometer as described herein, and
a cloud server comprising a cloud database for storing thermochromism reference data,
wherein each spectrophotometer is connectable to the cloud server to upload thermochromism reference data into the cloud database and/or to download thermochromism reference data from the cloud database.

Such a network allows for thermochromism reference data to be shareable among many spectrophotometer devices, which facilitates fast and reliable color measurements in the field.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic view of a first example of a measurement setup with a first exemplary embodiment of a spectrophotometer and a sample on a sample holder;
- Fig. 2: shows a schematic view of a second example of a measurement setup with a second exemplary embodiment of a spectrophotometer and a sample on a sample holder;
- Fig. 3: shows an example of a thermal infrared sensor device;
- Fig. 4: schematically illustrates the field-of-view of the thermal infrared sensor device of Fig. 3 in relation to a sample aperture of the spectrophotometer shown in Fig. 1 or Fig. 2;
- Fig. 5: shows a perspective view of the thermal infrared sensor device shown in Fig. 3;
- Fig. 6: shows the thermal infrared sensor device of Fig. 5 being thermally connected to the enclosure of the spectrophotometer;
- Fig. 7: shows an example of a calibration method for temperature-calibration of the spectrophotometer;
- Fig. 8: shows a schematic perspective bottom view the spectrophotometer of Fig. 1 or Fig. 2;
- Fig. 9: shows two examples of port reducers;
- Fig. 10: shows a bottom portion of a housing of the spectrophotometer of Fig. 1;
- Fig. 11: shows an enlarged view of the section marked in Fig. 10 with a first example of an insulation structure;
- Fig. 12: shows an enlarged view of the section marked in Fig. 10 with a second example of an insulation structure;
- Fig. 13: shows a schematic example of a processing unit of the spectrophotometer;
- Fig. 14: shows a schematic perspective view of a spectrophotometer with a user interface;
- Fig. 15: shows an example of the user interface shown in Fig. 14 in a first exemplary state in which a mode of operation may be selected;
- Fig. 16: shows an example of the user interface shown in Fig. 14 in a second exemplary state when the thermochromism reference data acquisition mode has been selected;
- Fig. 17: shows an example of the user interface shown in Fig. 14 in a third exemplary state in which a warning signal is issued in the thermochromism reference data acquisition mode;
- Fig. 18: an example of the user interface shown in Fig. 14 in a fourth exemplary state when the thermochromism-corrected measurement mode has been selected;
- Fig. 19: shows an example of the user interface shown in Fig. 14 in a sixth exemplary state in which a warning signal is issued in the thermochromism-corrected measurement mode;
- Fig. 20: shows an example of the user interface shown in Fig. 14 in a seventh exemplary state in which a warning signal is issued in the non-corrected measurement mode;
- Fig. 21: shows an example of the user interface shown in Fig. 14 in a eighth exemplary state in which a warning signal is issued in the non-corrected measurement mode;
- Fig. 22: shows wavelength-dependent reflectance profiles acquired at different temperatures as a function of wavelength;
- Fig. 23: shows a rate of reflectance change as a function of wavelength, and
- Fig. 24: shows a schematic illustration of a color measurement network.

### DESCRIPTION OF PREFERRED EMBODIMENTS

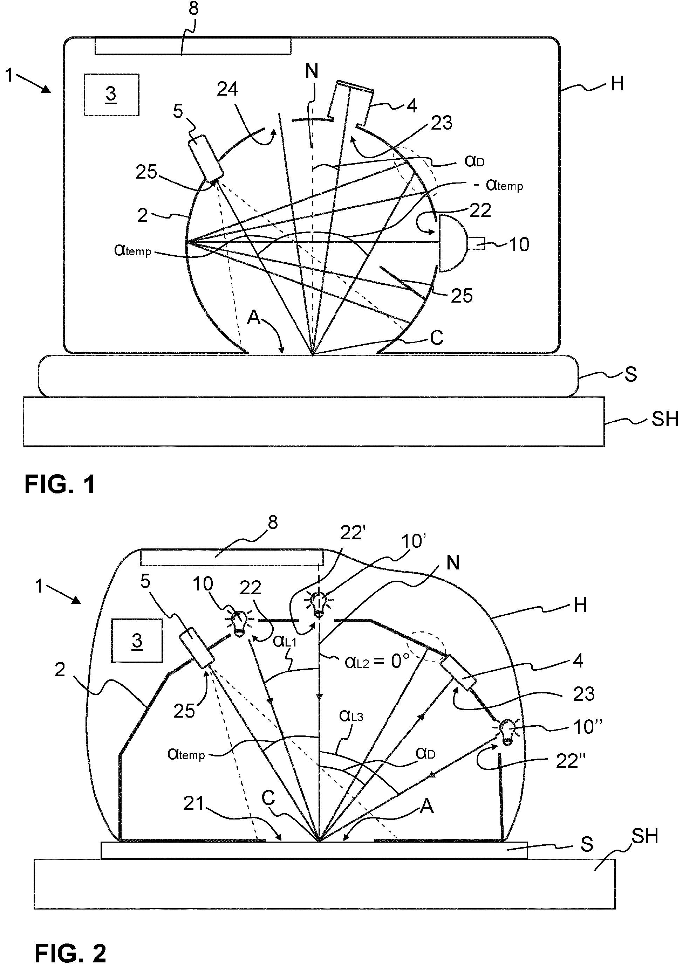

Fig. 1 and Fig. 2 schematically show a measurement setup comprising a spectrophotometer 1 placed on a sample S, wherein in the sample S is placed on a sample holder SH.

In the first example shown in Fig. 1, the spectrophotometer is a spherical spectrophotometer. The spectrophotometer 1 has a housing H which accommodates a sample illumination light source 10 configured to emit sample measurements light. The spectrophotometer 1 comprises an enclosure 2 defining a cavity arranged within the housing H, the enclosure defining a sample port with a sample aperture A through which a sample surface of a sample S can be illuminated when the spectrophotometer 1 is placed on the sample S. The spectrophotometer 1 has a device normal N, which is an imaginary straight line which is fixed relative to the spectrophotometer 1 and which extends essentially through a center point C of the sample aperture A of the spectrophotometer 1 and is perpendicular to the sample aperture A. The plane of the sample aperture A usually lies parallel to the sample surface, such that the device normal N is also perpendicular to the sample surface. In the following description of the spectrophotometer, angles are relative to the device normal N.

In this first exemplary embodiment, the enclosure 2 is an integrating sphere which is configured to diffuse the sample measurement light that enters the enclosure 2 through an illumination port 22 by causing the sample measurement light to undergo multiple reflections off an inner wall of the enclosure 2 before impinging on the sample S. The inner wall may be made of Spectralon. A baffle 25 is arranged within the enclosure 2 to prevent the sample measurement light from illuminating the sample S directly.

The spectrophotometer 1 comprises a sample measurement light detection unit 4, which is arranged within the housing H, but outside the cavity defined by the enclosure 2. The sample measurement light detection unit 4 is arranged under a spectral detection angle of α_{D} = 8° with respect to the device normal N. The spectrophotometer 1 is configured for obtaining a wavelength-dependent sample reflectance profile of the sample S based on a portion of the sample measurement light reflected from the sample S, wherein said portion of the sample measurement light reaches the sample measurement light detection unit 4 through a detection port 23. The sample measurement light detection unit 4 preferably comprises a spectrometer, in particular a diffraction-based spectrometer, capable of spectrally resolving the portion of the sample measurement light that is reflected from the sample S. Additionally, the sample measurement light detection unit 4 may comprise pick-up means, which may comprise one of more lenses and/or optical filters arranged between the detection port 23 and the spectrometer (not shown in Fig. 1).

The enclosure 2 further exhibits a gloss trap port 24 that is arranged at a gloss trap angle α_{G} which is equal but opposite with respect to the device normal, i.e. α_{G} = 8°. The spectrophotometer 1 may enable two types of reflectance: specular included (SPIN) and specular excluded (SPEX). To include gloss in the measurement, the gloss trap port 24 is closed by a shutter (not shown), which is preferably made of the same material as the inner wall of the integrating sphere. To exclude gloss, the gloss trap port 24 is left open to let the specular component of the sample measurement light reflected from the sample escape through the gloss trap port 24.

In the second example shown in Fig. 2 the spectrophotometer is a multi-angle spectrophotometer. The spectrophotometer 1 has a housing H and comprises an enclosure 2 defining a cavity arranged within the housing H, the enclosure 2 defining a sample port 21 with a sample aperture A through which a sample surface of a sample S can be illuminated when the spectrophotometer 1 is placed on the sample S. The spectrophotometer 1 has a device normal N, which is an imaginary straight line which is fixed relative to the spectrophotometer 1 and which extends essentially through a center point of the sample aperture A of the spectrophotometer 1 and is perpendicular to the sample aperture A. The plane of the sample aperture A usually lies parallel to the sample surface, such that the device normal N is also perpendicular to the sample surface. In the following description of the spectrophotometer, angles are relative to the device normal N.

The multi-angle spectrophotometer shown in Fig. 2 comprises a first sample illumination light source 10 configured to emit sample measurements light under a first illumination angle α_{L1}=20°, a second sample illumination light source 10' configured to emit sample measurements light under a second illumination angle α_{L2}=0°, i.e. along the device normal N, and a third sample illumination light source 10" configured to emit sample measurements light under a third illumination angle α_{L3}=65°. Other variants of this embodiment may comprise even more light sources and/or the light sources may emit light under different illumination angles than the illumination angles shown in Fig. 2. Each of the light sources 10, 10',10" are arranged outside the cavity defined by the enclosure 2, and the light emitted by each light source 10, 10', 10" enters the cavity through corresponding illumination ports 22, 22', 22", which are openings of the enclosure 2.

In this second example, the enclosure 2 is a scaffolding structure which has the shape of a polygon. However, other geometrical shapes are also conceivable. The spectrophotometer 1 comprises a sample measurement light detection unit 4, which is arranged within the housing H, but outside the cavity defined by the enclosure 2. The sample measurement light detection unit 4 is arranged under a spectral detection angle of α_{D} = 45° with respect to the device normal N. The spectrophotometer 1 is configured for obtaining a wavelength-dependent sample reflectance profile of the sample S based on a portion of the sample measurement light reflected from the sample S, wherein said portion of the sample measurement light reaches the sample measurement light detection unit 4 through a detection port 23. The sample measurement light detection unit 4 preferably comprises a spectrometer, in particular a diffraction-based spectrometer, capable of spectrally resolving the portion of the sample measurement light that is reflected from the sample S. Additionally, the sample measurement light detection unit 4 may comprise pick-up means, which may comprise one of more lenses and/or optical filters arranged between the detection port 23 and the spectrometer (not shown in Fig. 2).

### Temperature sensing device

Both the first example of the spectrophotometer shown in Fig. 1 and the second example of the spectrophotometer shown in Fig. 2 comprise a temperature sensing device 5 arranged at a temperature sensing port 25 of the enclosure 2 for measuring a sample temperature T_{S}.

In both examples, the temperature sensing device 5 may be a thermal infrared sensor configured to determine the temperature of an object that is within its field-of-view FOV based on thermal radiation emitted by said object.

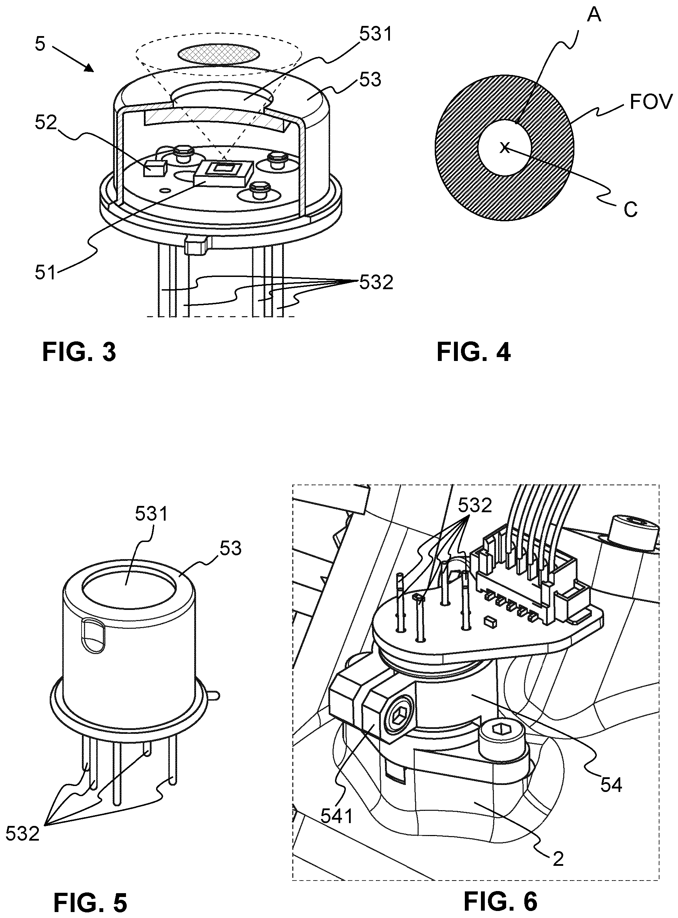

An example of such a thermal infrared sensor device 5 is shown in Fig. 3. The thermal infrared sensor device 5 comprises a thermopile sensing unit 51 which has multiple thermocouples connected in series. The thermocouples each have a "hot" junction attached to a thin infrared absorber layer, which can absorb thermal radiation emitted from an object whose temperature is to be determined, and which changes its temperature as a function of the amount of absorbed thermal radiation, and a "cold" junction located in a bulk portion of the thermal infrared sensor device 5. The thermal infrared sensor device 5 comprises a built-in reference temperature sensor 52, which measures a temperature *Tₛₑₙₛₒᵣ* of the bulk portion of the thermal infrared sensor device 5. On each thermocouple, a voltage is created that is proportional to a temperature difference between the "hot" and the "cold" junction as a consequence of the Seebeck effect. The thermopile's total output voltage is equal to the sum of the voltages across the individual thermocouples. As shown in Fig. 3, the thermopile sensing unit 51 and built-in temperature reference sensor 52 may be arranged in a TO-casing 53 having a window 531 through which the thermal radiation can reach the thermopile sensing unit 51 and which determines the field-of-view FOV of the thermal infrared sensor device 5. The TO-casing further comprises pins 532 to which electronic circuitry can be connected in order to process the output signal of the thermal infrared sensor device 5 and derive the temperature of the object to be measured based on said output signal.

In particular, the thermal infrared sensor device 5 provides an output voltage *ΔU* that can be expressed as follows: $Δ U = {kE}_{obj} \left({T}_{obj}^{4}-{T}_{sensor}^{4}\right)$ where *E_{obj}* is the material emissivity of the object emitting the thermal radiation, *T_{obj}* is the temperature of the object to be measured, *Tₛₑₙₛₒᵣ* is the temperature of the bulk portion of the thermal infrared sensor itself and k is a calibration constant. However, the equation mentioned above only holds in case the object completely fills the field-of-view of the thermal infrared sensor.

In both the example shown in Fig. 1 as well as the example shown in Fig. 2, the thermal infrared sensor device 5 has a field-of-view FOV which covers an area that comprises the sample aperture A, but also a portion of the enclosure 2 which surrounds the sample aperture A. In other words, the thermal infrared sensor device 5 not only sees the sample S positioned at the sample port, but also the portion of the enclosure 2 around the sample aperture A, as schematically visualized in Fig. 4.

In such a case, the output voltage *ΔU* comprises the following contributions:
*ΔUₛₐₘ* : originates from thermal radiation emitted by the sample S
*ΔU_{encl}*: originates from thermal radiation emitted by the portion of the enclosure 2 that surrounds the sample aperture A and is within the field-of-view of the thermal infrared sensor
Δ*U_{refl,sam}*: originates from thermal radiation that is emitted by the enclosure 2 (or any other component) and reflected on the sample S
Δ*U_{refl,encl}*: originates from thermal radiation that is emitted by the enclosure 2 (or any other component) and reflected on the portion of the enclosure 2 that surrounds the sample aperture A and is within the field-of-view of the thermal infrared sensor.

Thus, the thermal infrared sensor provides an output voltage Δ*Uₜₒₜ* that can be expressed as follows: $\begin{matrix}Δ {U}_{tot} = Δ {U}_{sam} + Δ {U}_{encl} + Δ {U}_{refl , sam} + Δ {U}_{refl , encl} \\ = {kE}_{sam} {F}_{FOV} \left({T}_{sam}^{4}-{T}_{sensor}^{4}\right) \\ + {kE}_{encl} \left(1-{F}_{FOV}\right) \left({T}_{encl}^{4}-{T}_{sensor}^{4}\right) \\ + k \left(1-{E}_{sam}\right) {E}_{encl} {F}_{FOV} \left({T}_{refl}^{4}-{T}_{sensor}^{4}\right) \\ + k \left(1-{E}_{encl}\right) {E}_{encl} \left(1-{F}_{FOV}\right) \left({T}_{refl}^{4}-{T}_{sensor}^{4}\right)\end{matrix}$ where *Tₛₐₘ* is the temperature of the sample S, *T_{encl}* is the temperature of the portion of the enclosure 2 that surrounds the sample aperture A, *T_{refl}* is the reflected temperature, also called the background temperature, *Eₛₐₘ* is the emissivity of the sample S, *E_{encl}* is the emissivity of the enclosure, *k* is a calibration constant and *F_{FOV}* is the fraction of the field-of-view FOV of the thermal infrared sensor device 5 covered by the sample S.

### Thermal equilibrium

In the present disclosure, it is proposed that the thermal infrared sensor device 5 is thermally connected to the portion of the enclosure which surrounds the sample aperture A so as to be in thermal equilibrium with the portion of the enclosure 2 surrounding the sample aperture A. When in thermal equilibrium, the temperature *Tₛₑₙₛₒᵣ* of the bulk portion of the thermal infrared sensor device 5 itself and the temperature *T_{encl}* of the portion of the enclosure 2 that surrounds the sample aperture A are the same, i.e. *Tₛₑₙₛₒᵣ = T_{encl}.* As a consequence, the contribution to the output voltage of the thermal infrared sensor device 5 originating from thermal radiation emitted by the portion of the enclosure 2 that surrounds the sample aperture A and that is within the field-of-view of the thermal infrared sensor vanishes, i.e. Δ*U_{encl} =* 0.

The thermal infrared sensor device 5 defines a measurement axis which traverses the cavity defined by the enclosure 2 and forms a temperature measurement angle with respect to the device normal N. In order to prevent additional thermal radiation from entering the cavity from outside of the enclosure 2 and being reflected on the sample S, the enclosure 2 does not have any holes arranged under an angle that is equal but opposite to the temperature measurement angle with respect to the device normal N, and the thermal infrared sensor device 5 is thermally connected to a portion of the enclosure 2 which surrounds the angle that is equal but opposite to the temperature measurement angle so as to be in thermal equilibrium with said the portion of the enclosure 2. In the examples shown in Fig. 1 and Fig. 2, the temperature measurement angle with respect to the device normal N is αₜₑₘₚ=30°. The portion of the enclosure 2 which surrounds the angle that is equal but opposite to the temperature measurement angle, i.e. the portion of the enclosure around (- αₜₑₘₚ), is schematically marked in Fig. 1 and Fig. 2 by a dashed ellipse.

Preferably, the thermal infrared sensor device 5 is also in thermal equilibrium with at least all parts of the enclosure 2 from which thermal radiation can be emitted such that it is reflected on the sample S, i.e. such that *Tₛₑₙₛₒᵣ = T_{refl}* and therefore *ΔU_{refl,sam}*= *ΔU_{refl,encl} =* 0.

In such a case, the relation between the output voltage Δ*Uₜₒₜ* of the thermal infrared sensor device 5 and the sample temperature *Tₛₐₘ* get simplified to: $Δ {U}_{tot} = {kE}_{sam} {F}_{FOV} \left({T}_{sam}^{4}-{T}_{sensor}^{4}\right)$

Fig. 5 shows a thermal infrared sensor device 5 with a TO-casing 53 comprising pins 532. Fig. 6 shows the thermal infrared sensor device 5 of Fig. 5 thermally connected to the enclosure 2 via a coupling piece 54, which provides thermal connection between the TO-casing and the enclosure 2. The TO-casing 53 is thermally connected to the bulk portion of the thermal infrared sensor device 5. Ideally, the TO-casing 53 and the coupling piece 54 are each made of a metal. As shown in Fig. 6, the coupling piece 54 may comprise a cylindrical holder in which the TO-casing is received and preferably comprises adjustable clamping means 541 to ensure that the cylindrical holder can be tightly clamped around the TO-casing 53. The coupling piece 54 itself may be attached to the enclosure 2 using suitable connection means, e.g. screws made of a metal, or may be formed as a part of the enclosure 2. The enclosure 2 preferably comprises or consists of a metal, in particular aluminum, copper or magnesium.

### Calibration method

As apparent form the equations stated above, in order to retrieve the sample temperature *Tₛₐₘ* from the output voltage Δ*Uₜₒₜ* of the thermal infrared sensor device 5, the fraction *F_{FOV}* of the field-of-view FOV of the thermal infrared sensor device 5 covered by the sample S needs to be known. This fraction *F_{FOV}* may vary depending on the exact positioning and orientation of the thermal infrared sensor device 5 with respect to the sample aperture A and typically needs to be determined in a calibration method for temperature-calibration of each individual spectrophotometer 1 as a part of a factory calibration process prior the first use of the spectrophotometer 1 or in case the thermal infrared sensor device 5 has to be replaced.

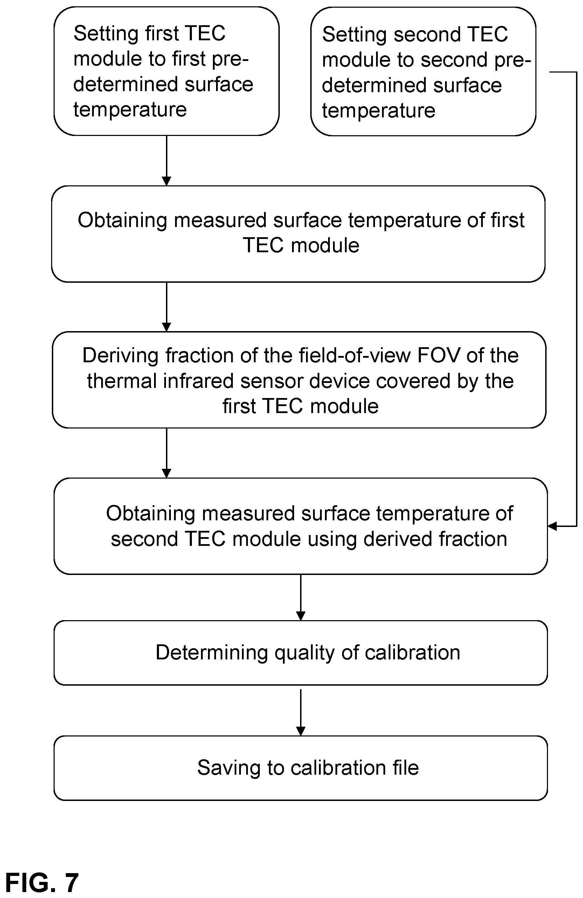

A specific embodiment of said calibration method is schematically shown in Fig. 7. The method requires using two thermoelectric cooling (TEC) modules used as calibration samples with a pre-determined (i.e. known) emissivity *E_{TEC}* and comprises the following steps:
Step 1: Setting the first TEC module to a first pre-determined surface temperature (i.e. first set temperature) *T*_{*TEC,*1}=45°C*,* and setting the second TEC module to a second pre-determined surface temperature (i.e. second set temperature) *T*_{*TEC,*2}*=*25°C*.*
Step 2: Placing the spectrophotometer 1 on the first TEC module and obtaining a measured surface temperature of the first TEC module *T*_{*meas*,1} with the thermal infrared sensor device 5 of the spectrophotometer 1 by assuming a predefined factory value for the fraction *F_{FOV},* in particular *F_{FOV} =* 1 for simplicity.
Step 3: Deriving the effective value of the fraction *F_{FOV}* by using the known emissivity *E_{TEC}* and imposing the requirement that the measured surface temperature of the first TEC module *T*_{*meas*,1} must equal the first pre-determined surface temperature *T*_{*TEC,*1}*,* i.e. *T*_{*meas,*1} = *T*_{*TEC,*1}*.*
Step 4: Placing the spectrophotometer 1 on the second TEC module and obtaining a measured surface temperature of the second TEC module *T*_{*meas*,2} with the thermal infrared sensor device 5 of the spectrophotometer 1 using the effective value of the fraction *F_{FOV}* determined in step 3.
Step 5: Calculating a temperature offset between *T*_{*meas*,2} and *T_{TEC,2},* i.e. ΔT*_{offset} = T*_{*meas*,2} - *T*_{*TEC,*2} to verify the calibration. In an ideal case, ΔT*_{offset} =* 0.
Step 6: Save the effective value of the fraction *F_{FOV}* and the temperature offset ΔT*_{offset}* into a calibration file.

In alternative embodiment, the same TEC module set to two different temperatures *T*_{*TEC,*1} and *T*_{*TEC*,2} can be used instead of using two different TEC modules.

### Sample port and sample holder

Especially when measuring small samples and/or samples with an inhomogeneous surface, it may be desirable to reduce an aperture size of the sample aperture A.

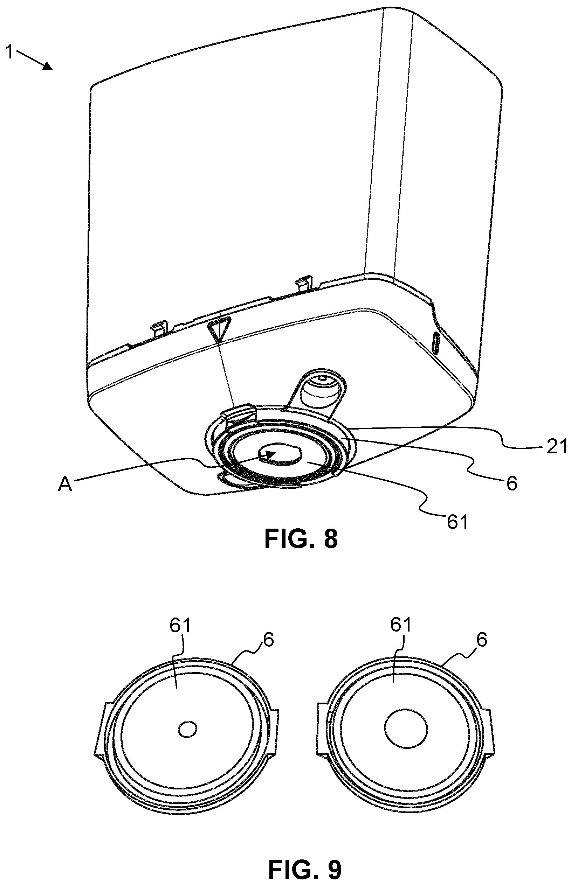

Fig. 8 shows a perspective bottom view of a spectrophotometer 1 with a port reducer 61 placed at the sample port 21. The port reducer 61 reduces the aperture size of the sample aperture A, in particular its diameter in case of a circular sample aperture A. The port reducer 6 can be an iris shutter, which may be fixedly installed in the spectrophotometer 1. Alternatively, the port reducer 61 may be a plate with an opening being smaller than a non-reduced size of the sample aperture A, wherein the plate is arranged in a cap piece 6, wherein the cap piece 6 is removably attachable to the housing H of the spectrophotometer 1. Fig. 9 shows two cap pieces 6, each comprising a port reducer 61 with different size openings, but both openings being smaller than a non-reduced size of the sample aperture A to effectively reduce the size of the sample aperture A. In order not to influence the temperature measurement of the thermal infrared sensor device 5, the port reducer 61 preferably exhibits an emissivity which is preferably smaller than 0.2. Preferably, it is made of a polished metal, in particular polished stainless steel.

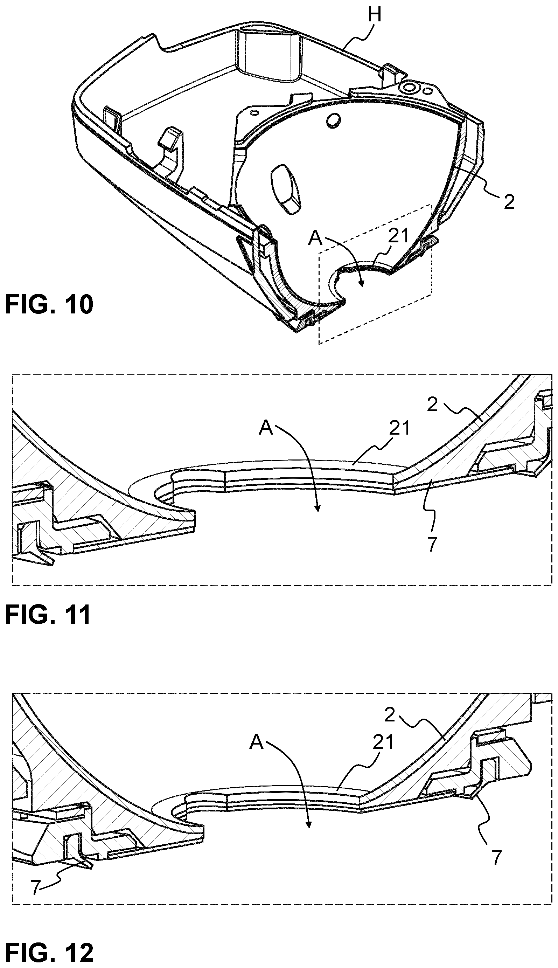

Fig. 10 shows a bottom portion of the housing H of a spectrophotometer 1 with a portion of an enclosure 2 having a sample port 21 with a sample aperture A through which sample measurement light can interact with a sample and/or through which a sample temperature of the sample may be measured using a temperature sensing device 5 as described above.

In order to be able to accurately determine the sample temperature to take into account potential thermochromic effects, it is advantageous to minimize thermal interaction between the sample to be measured and the spectrophotometer 1. To this end, the spectrophotometer 1 may comprise an insulation structure arranged at the sample port 21.

Fig. 11 and Fig. 12 show an enlarged view of the section marked by a dashed line in Fig. 10, each figure showing a different example of an insulation structure 7 arranged at the sample port 21.

In the first example shown in Fig. 11, the insulation structure 7 is an insulation layer made of an insulating material, e.g. rubber or polytetrafluoroethylene (PTFE) that is in contact with the sample S when the spectrophotometer 1 is placed on the sample S to carry out a measurement.

In the second example shown in Fig. 12, the insulation structure 7 comprises at least one spacer element, e.g. a spacer ring or spacer feet, arranged at a distance of the sample aperture A, wherein the at least one spacer element protrudes from a bottom surface of the housing H of the spectrophotometer 1 such that an insulating air gap occurs between the spectrophotometer 1 and a portion of the sample S which is directly positioned under the aperture A when the spectrophotometer is placed on the sample S.

If the spectrophotometer is used to acquire thermochromism reference data, as will be described in further detail below, the sample holder SH on which the sample S is placed as shown in Fig. 1 and Fig. 2 is preferably specifically configured to prevent the sample S from changing its temperature too quickly by exhibiting a suitable thermal mass and thermal conductivity. The thermal mass and thermal conductivity needed may be pre-determined based on the thermal mass of the sample S itself, which may be either known or measured separately, and an acquisition rate at which the spectrophotometer 1 is capable of acquiring wavelength-dependent sample reflectance profiles. Ideally, the thermal mass and the thermal conductivity of the sample holder is chosen such that the temperature of the sample changes by less than 15°C between each acquisition. In particular, the sample holder may comprise or consist of a high thermal conductivity material, such as aluminium and/or copper. The high thermal conductivity ensures that the thermal resistance between the sample and holder is as low as possible, improving the heat transfer rate between them.

### Processing unit

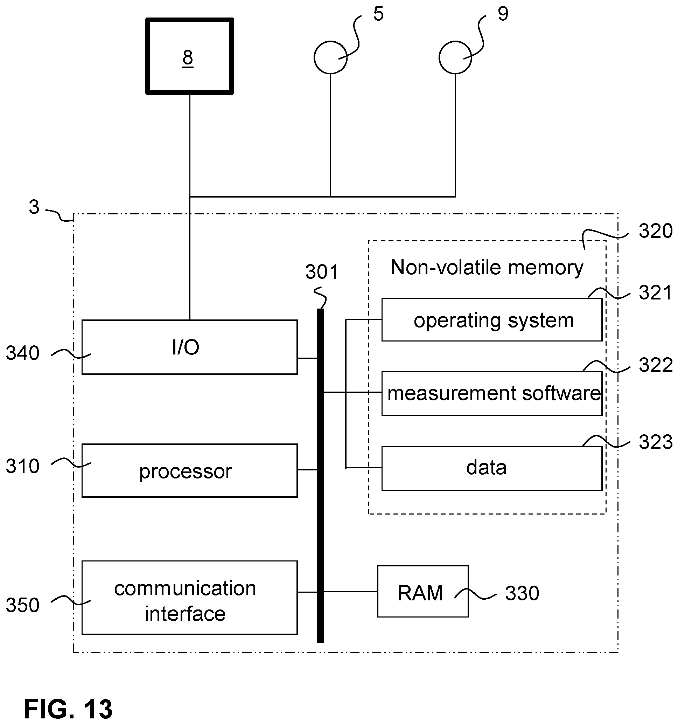

The spectrophotometer of Fig. 1 and Fig. 2 each comprise a processing unit 3 and a user interface 8, which in particular comprises a display. Fig. 13 illustrates the processing unit 3 with a highly schematic functional diagram. The processing unit 3 typically comprises a processor 310 communicating via a bus system 301 with a non-volatile (ROM) memory 320, a volatile (RAM) memory 330, an input/output (I/O) interface 340, and a communication interface 350. The non-volatile memory 320 may be, e.g., a flash memory device. It stores, inter alia, an operating system 321 and several application programs, including a measurement software 322. These pieces of software will be explained in more detail below. The non-volatile memory 320 further stores user data, including data that is used or generated by the measurement software 322.

Connected to the input/output interface 340 are the display 8, a temperature sensing device 5 that is integrated into the spectrophotometer 1, e.g. in the form of thermal infrared sensor device as described above, and a control member 9 in the form of one or more push buttons.

The communication interface 350 may include, e.g., one or more of an Ethernet interface, a WiFi interface, a Bluetooth^{™} interface etc.

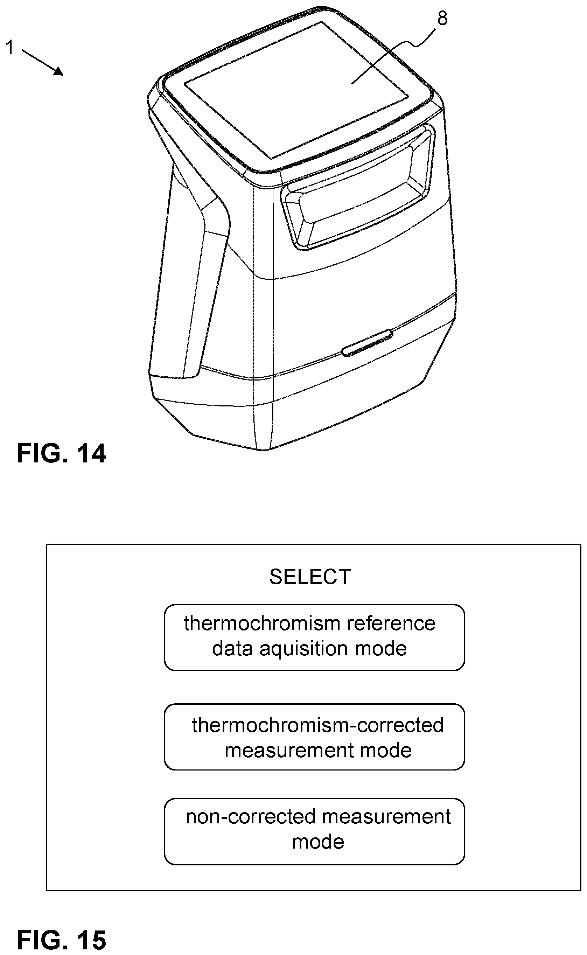

Fig. 14 shows a schematic perspective view of a spectrophotometer 1, which may be configured as shown in Fig. 1 or Fig. 2, and which comprises a display as a user interface 8.

In a preferred embodiment, the spectrophotometer 1 comprises three measurement modes, which may be displayed to a user via the user interface 8 as schematically illustrated in Fig. 15: a thermochromism reference data acquisition mode, a thermochromism-corrected measurement mode, and a non-corrected measurement mode.

### Thermochromism reference data acquisition mode

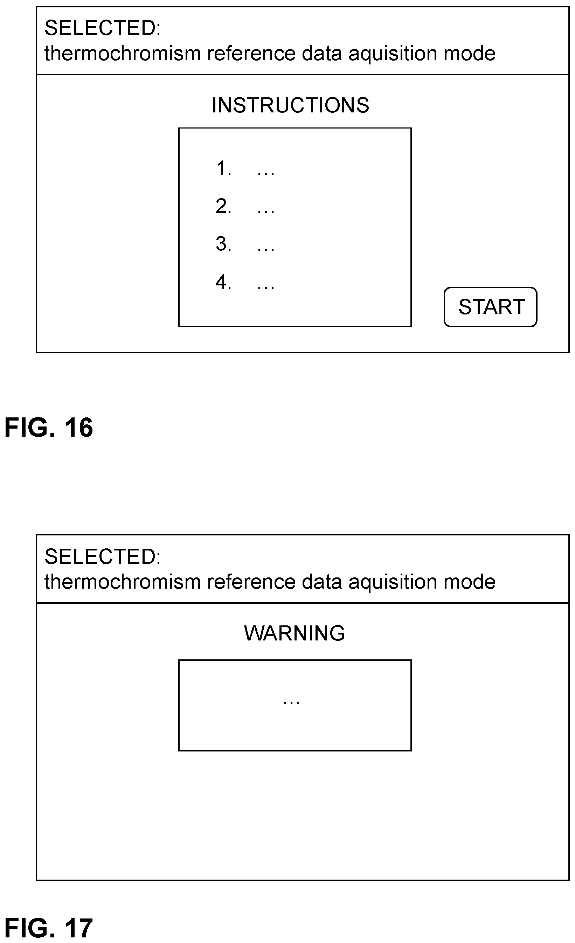

In the thermochromism reference data acquisition mode, which is illustrated schematically in Fig. 16 and Fig. 17, the processing unit 3 is configured to output instructions via the user interface 8, wherein the instructions comprise a sample treatment instruction to heat or cool a reference sample and a measurement instruction to acquire a wavelength-dependent sample reflectance profile at different sample temperatures *Tₛₐₘ* while the reference sample is heating up or cooling down to obtain thermochromism reference data.

The user may initiate a reference data acquisition sequence, e.g. by pressing a physical start button or selecting a start button on the display 8, in which case the spectrophotometer 1 acquires wavelength-dependent sample reflectance profiles *Rᵢ*(λ) of the sample S and simultaneously measures the sample temperature *T*_{*sam*,*i*} at an acquisition rate of e.g. one measurement every 3s, while the sample S either cools down or heats up. In the following, the letter "i" denotes the measurement index.

In a specific example, the reference data acquisition sequence stops when one of the following conditions is fulfilled:
a. The sample temperate *Tₛₐₘ* no longer changes significantly, e.g. it has not changed by more than 0.5°C for the last 4 measurements.
b. Sufficient data has been acquired.
c. A maximum timeout has been reached, e.g. 4 min.
d. The sample temperature *Tₛₐₘ* exceeds a maximum threshold, e.g. > 60 °C, or has fallen below a minimum threshold, e.g. <5°C.

Depending on the condition for the termination of the reference data acquisition sequence, a corresponding warning may be issued to the user via the user interface 8, as shown in Fig. 17.

In the following, typical data processing steps are described:
Step 1: Determining, after the wavelength-dependent sample reflectance profiles *Rᵢ*(λ) of the sample S and the corresponding sample temperature *T*_{*sam*,*i*} have been acquired, a linear fitting function of the reflectance values *Rᵢ*(λ*ₘ*) at each wavelength *λₘ* as a function of the sample temperature *T*_{*sam*,*i*}, i.e. ${R}_{{λ}_{m}} \left(T\right) = {R}_{ref , {T}_{ref}} \left({λ}_{m}\right) + \frac{dR}{dT} \left({λ}_{m}\right) T$*.*
Step 2: Extracting the following parameters from each fit:
   *R_{ref,T_{ref}}*(*λₘ*): Reflectance value at wavelength *λ*ₘ at a reference temperature *T_{ref},* wherein the reference temperature *T_{ref}* may be pre-set in the spectrophotometer 1 or input by the user via the user interface 8 either before or after the acquisition sequence $\frac{dR}{dT}$: slope of the linear fitting function
   RMSE: root mean square error between the measured reflectance values and the calculated reflectance values based on the linear fit.
Step 3: Determining if one or more fitting parameters exceeds a pre-determined quality threshold and outputting a quality warning via the user interface 8 if the one or more fitting parameters exceeds the pre-determined quality threshold to indicate to the user that the data quality is poor and optionally outputting a suggestion to the user via the user interface 8 to repeat the reference data acquisition sequence.
Step 4: Calculating a color error Δ*E* for each wavelength-dependent sample reflectance profiles *Rᵢ*(*λ*) with respect to *R_{cold}*(*λ*), which is the wavelength-dependent sample reflectance profile measured at the coldest sample temperature recorded in the reference data acquisition sequence. For example, the color error Δ*E* can be defined as the color difference between two colors defined in the CIELAB color space, i.e. $Δ E = Δ {E}_{a , b}^{*} = \sqrt{{\left({L}_{2}^{*}-{L}_{1}^{*}\right)}^{2} + {\left({a}_{2}^{*}-{a}_{1}^{*}\right)}^{2} + {\left({b}_{2}^{*}-{b}_{1}^{*}\right)}^{2}}$ where ( ${L}_{1}^{*} , {a}_{1}^{*} , {b}_{1}^{*}$) are the color coordinates of the first color and ( ${L}_{2}^{*} , {a}_{2}^{*} , {b}_{2}^{*}$) are the color coordinates of the second color, wherein the color coordinates are derived from the respective wavelength-dependent sample reflectance profile in a manner that is well-known in the art.
Step 5: Determine a linear fitting function of the color error as a function of temperature, i.e. $Δ E \left(T\right) = \frac{d E}{dT} T .$
Step 6: Extracting the following parameters from the fit:
   $\frac{d E}{dT}$: slope of the linear fitting function
   RMSE: root mean square error between the measured color error and the calculated color error based on the fit.

In a specific example, the thermochromism reference data comprises:
- a wavelength vector (integer array, 1xm) comprising the wavelength values *λₘ* on which the reflectance *R*(*λₘ*) is defined
- a temperature vector (double array, 1xn) comprising the temperature values *T*_{*sam*,*i*} acquired during the reference data acquisition sequence
- a date (string), e.g. in the format yyyymmddhhmmss
- a label for the fitting model used (string), e.g. "linear"
- a measured reflectance matrix (double array, mxn) comprising a reflectance vector of measured reflectance values (mx1) saved for every temperature (1xn)
- a reference reflectance vector (double array, mx1) comprising measured reflectance values obtained at the temperature *T_{ref}*
- a reflectance change vector (double array) comprising a rate of reflectance change per degree celsius for each wavelength in the wavelength vector (i.e. $\frac{dR}{dT} \left({λ}_{m}\right.$)

### Thermochromism-corrected measurement mode

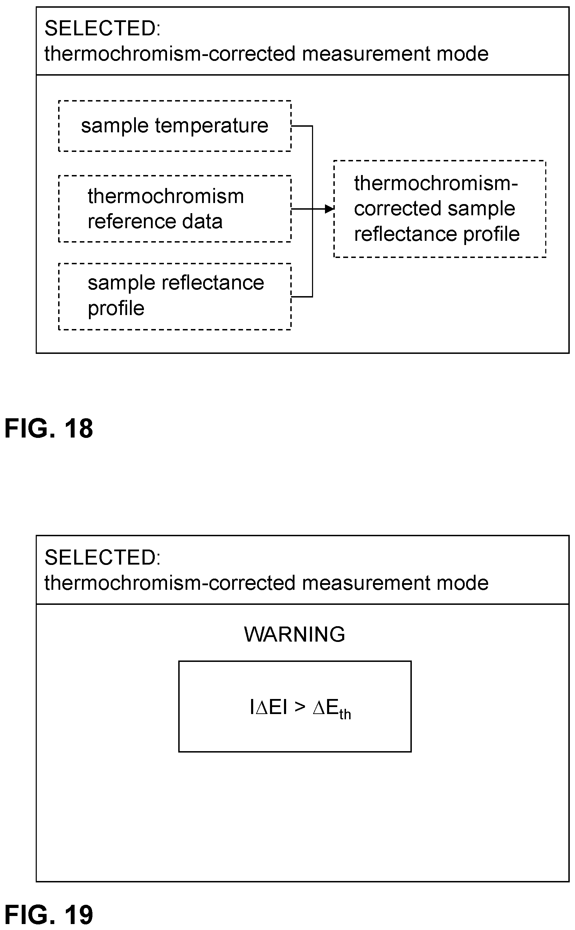

In the thermochromism-corrected measurement mode, which is schematically illustrated in Fig. 18 and Fig. 19, the processing unit is configured to access thermochromism reference data to calculate a thermochromism-corrected sample reflectance profile *R*_{*corr*,*meas*}(*λₘ*) for the measurement sample based on the sample temperature *Tₛₐₘ*, the wavelength-dependent sample reflectance profile obtained by the sample measurement light detection unit *Rₘₑₐₛ*(*λₘ*), and the thermochromism reference data.

In a preferred embodiment, the processing unit is further configured to perform the following steps:
Step 1: Correcting either the measured wavelength-dependent sample reflectance profile *Rₘₑₐₛ*(*λₘ*) or a reference wavelength-dependent sample reflectance profile *R_{ref,T_{ref}}*(*λₘ*) from the thermochromism reference data based on the thermochromism reference data and the sample temperature *Tₛₐₘ*, i.e. ${R}_{corr , meas} \left({λ}_{m}\right) = {R}_{meas} \left({λ}_{m}\right) - \left({T}_{sam}-{T}_{ref}\right) \frac{dR}{dT}$ or ${R}_{corr , ref} \left({λ}_{m}\right) = {R}_{ref} \left({λ}_{m}\right) - \left({T}_{ref}-{T}_{sam}\right) \frac{dR}{dT}$
Step 2: Deriving a sample color (*L*a*b**)*_{meas,corr}* from the corrected reflectance profile *R*_{*corr*,*meas*}(*λₘ*), deriving a reference color (*L*a*b**)*_{ref}* from the reference reflectance profile *R_{ref}*(*λₘ*)*,* and calculating a color difference $Δ E = Δ {E}_{a , b}^{∗} =$ $\sqrt{{\left({L}_{meas , corr}^{∗}-{L}_{ref}^{∗}\right)}^{2} + \left({a}_{meas , corr}^{∗}-{{a}_{ref}^{∗}}^{2}\right) + {\left({b}_{meas , corr}^{∗}-{b}_{ref}^{∗}\right)}^{2}}$; or deriving a sample color (*L*a*b**)*ₘₑₐₛ* from the measured reflectance profile *Rₘₑₐₛ*(*λₘ*), deriving a corrected reference color (*L*a*b**)*_{ref,corr}* from the corrected reference reflectance profile *R_{ref}*(*λₘ*), and calculating a color difference $Δ E = Δ {E}_{a , b}^{∗} =$ $\sqrt{{\left({L}_{meas}^{∗}-{L}_{ref , corr}^{∗}\right)}^{2} + \left({a}_{meas}^{∗}-{{a}_{ref , corr}^{∗}}^{2}\right) + {\left({b}_{meas}^{∗}-{b}_{ref , corr}^{∗}\right)}^{2}}$.
Step 3: Comparing the magnitude of the color difference Δ*E* to a pre-determined color difference threshold Δ*Eₜₕ,* and outputting a color difference warning signal via the user interface if the color difference exceeds a pre-determined color difference threshold, i.e. if |Δ*E*| > Δ*Eₜₕ.*

Such a warning indicates that the selected thermochromic reference data is not suitable to use for correcting the measured reflectance profile of the current sample, e.g. because the current sample and the reference sample used to acquire the thermochromism reference data differ too strongly from each other. In such a case, an instruction may be output to the user to select different thermochromic reference data or, if not available, to acquire new thermochromic reference data as described above.

### Non-corrected measurement mode

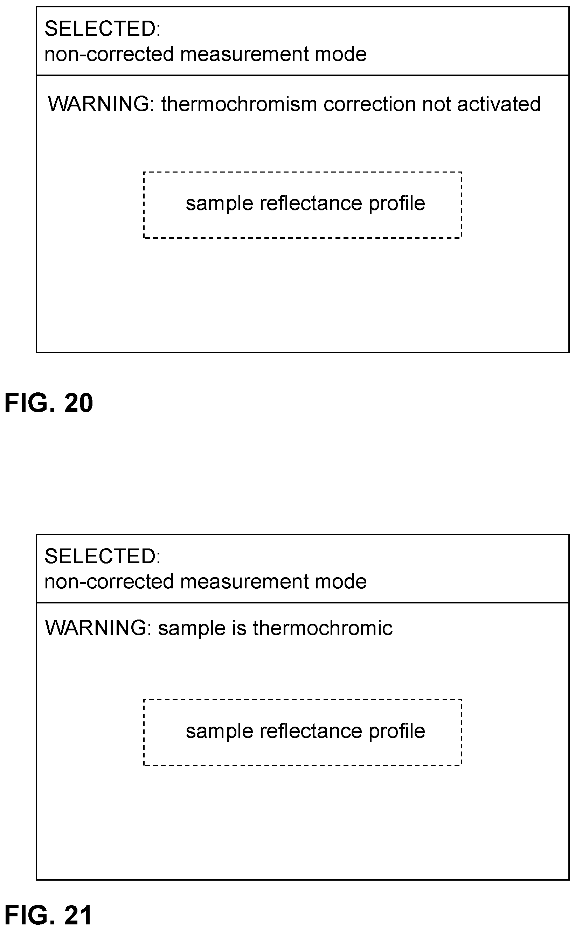

In the non-corrected measurement mode, which is schematically illustrated in Fig. 20 and Fig. 21, the processing unit is configured to output the wavelength-dependent sample reflectance profile *Rₘₑₐₛ*(*λₘ*) obtained by the sample measurement light detection unit without taking into account the sample temperature.

As schematically shown in Fig. 21, the processing unit can be further configured to output an activation warning signal via the user interface 8 to indicate that thermochromism correction is not activated to remind the user that the spectrophotometer is currently measuring in the non-corrected measurement mode.

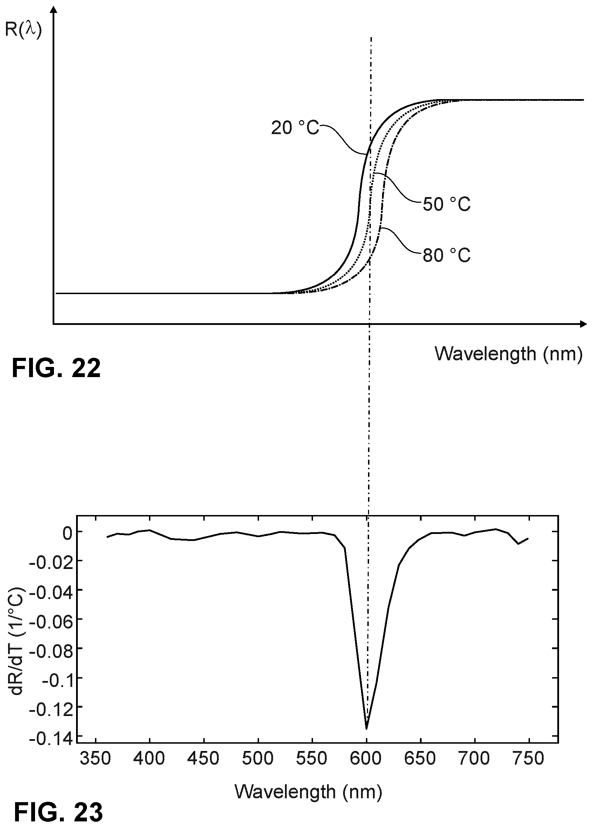

As schematically shown in Fig. 22, the processing unit can be further configured to predict whether the sample is thermochromic and output a thermochromism warning signal depending on this prediction via the user interface 8.

Two examples of how such a prediction may be generated are given below.

### First example of a thermochromism prediction

In the first example, a prediction model is used that is based on reference reflectance data, in particular the derivative of the reflectance as a function of wavelength $\frac{\partial R}{\partial {λ}_{m}} \left({λ}_{m}\right)$ that has been measured for a plurality of different reference samples. Fig. 22 shows typical wavelength-dependent reflectance profiles *Rₘₑₐₛ*(*λₘ*) measured at different temperatures *Tᵢ*. Fig. 23 shows an example for a rate of reflectance change with temperature $\frac{dR}{dT} \left({λ}_{m}\right)$ obtained from the data shown in Fig. 22. The derivative of the reflectance $\frac{\partial R}{\partial {λ}_{m}} \left({λ}_{m}\right)$ can typically be fitted with one or multiple Gaussian functions. The prediction model is developed and trained using machine learning to find a relation between a peak position, a width and an amplitude of said Gaussian fits and the rate of color change $\frac{dE}{dT}$*.*

### Second example of a thermochromism prediction

In the second example, color coordinates, e.g. CIELab color coordinates (L*,a*,b*) are derived from the wavelength-dependent sample reflectance profile *Rₘₑₐₛ*(*λₘ*) of the measurement sample. The measurement sample is then classified as thermochromic if the following condition is fulfilled, where *cₜₕ* denotes a pre-determined threshold value: $\left|{a}^{∗}+{b}^{∗}\right| > {c}_{th}$

### Color measurement network system

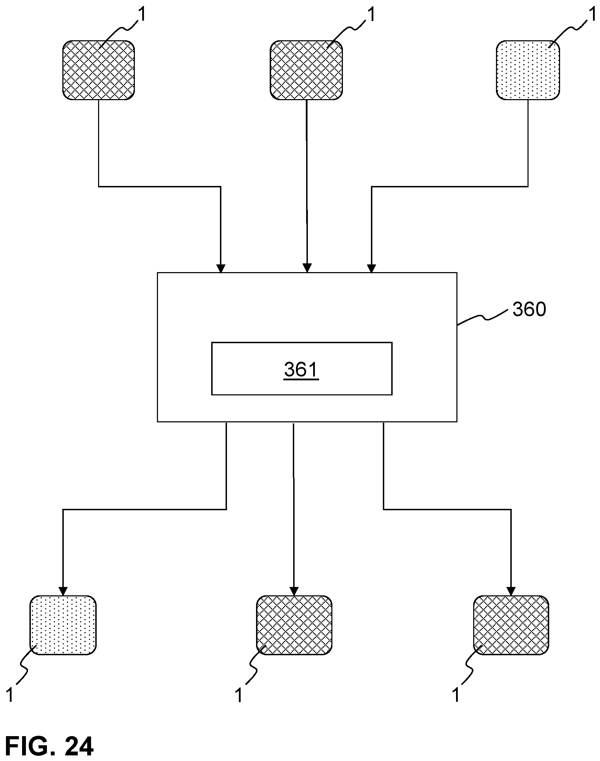

Fig. 24 shows in a highly schematic manner a color measurement network system, which comprises a plurality of different spectrophotometers 1, which may be of different types, i.e. of the spherical spectrophotometer-type as shown in Fig. 1 (symbolized by cross-hatching in Fig. 24) and of the multi-angle spectrophotometer-type (symbolized by dot filling in Fig. 24). The color measurement network system further comprises a cloud server 360, which comprises a cloud database 361. Each spectrophotometer 1 is connectable to the cloud server 360 to upload thermochromism reference data into the cloud database 361 and/or to download thermochromism reference data from the cloud database 361.

The communication interface 350 in the processing unit 3 of each spectrometer 1, shown in Fig. 13, may serve for communication with the remote cloud server 360.

The cloud server 360 itself may be set up similarly to the processing unit 3. In some embodiments, the cloud server 360 may store additional data processing software.

### LIST OF REFERENCE SIGNS

- 1: spectrophotometer
- 10, 10', 10": sample illumination light source
- 2: enclosure
- 21: sample port
- 22, 22', 22": illumination port
- 23: detection port
- 24: gloss trap port
- 25: baffle
- 3: processing unit
- 310: processor
- 320: non-volatile memory
- 321: operating system software
- 322: defect detection software
- 323: appearance capture software
- 330: RAM
- 340: I/O interface
- 350: communication interface
- 360: cloud server
- 361: cloud database
- 4: sample measurement light detection unit
- 5: thermal infrared sensor
- 51: thermopile sensing unit
- 52: built-in temperature reference sensor
- 53: TO-casing
- 54: coupling piece
- 531: window
- 532: pins
- 6: cap piece
- 61: port reducer
- 7: insulation structure
- 8: user interface
- A: aperture
- C: center point
- N: device normal
- S: sample
- H: housing

## Claims

1. A spectrophotometer (1) comprising:
a sample illumination light source (10, 10', 10") configured to emit sample measurement light;
a sample measurement light detection unit (4) for obtaining a wavelength-dependent sample reflectance profile based on a portion of the sample measurement light reflected from a sample (S);
a temperature sensing device (5) for measuring a sample temperature;
a user interface (8), and
a processing unit (3) that comprises a thermochromism reference data acquisition mode,
wherein in the thermochromism reference data acquisition mode, the processing unit (3) is configured to output instructions via the user interface (8), wherein the instructions comprise
a sample treatment instruction to heat or cool a reference sample, and
a measurement instruction to acquire a wavelength-dependent sample reflectance profile at different sample temperatures while the reference sample is heating up or cooling down to obtain thermochromism reference data.

2. The spectrophotometer (1) of claim 1, wherein in the thermochromism reference data acquisition mode, the processing unit (3) is further configured to:
determine a fitting function based on the wavelength-dependent sample reflectance profiles obtained as a function of the sample temperature,
optionally, calculating a quality parameter quantifying a quality of the fitting function,
optionally, determining if the quality parameter exceeds a pre-determined quality threshold, and
optionally, outputting a quality warning via the user interface (8) if the quality parameter exceeds the pre-determined quality threshold.

3. The spectrophotometer (1) of claim 1 or 2, wherein the processing unit (3) is configured to be switchable at least between the thermochromism reference data acquisition mode and a thermochromism-corrected measurement mode for measuring a measurement sample (S),
wherein in the thermochromism-corrected measurement mode, the processing unit (3) is configured to access thermochromism reference data, in particular thermochromism reference data that has been acquired using a spectrophotometer (1) according to claim 1 or 2, and to calculate a thermochromism-corrected sample reflectance profile for the measurement sample based on the sample temperature, the wavelength-dependent sample reflectance profile obtained by the sample measurement light detection unit (4), and the thermochromism reference data.

4. A spectrophotometer (1) comprising:
a sample illumination light source (10, 10', 10") configured to emit sample measurement light;
a sample measurement light detection unit (4) for obtaining a wavelength-dependent sample reflectance profile based on a portion of the sample measurement light reflected from a sample (S);
a temperature sensing device (5) for measuring a sample temperature;
a user interface (8), and
a processing unit (3) that comprises a thermochromism-corrected measurement mode for measuring a measurement sample (S),
wherein in the thermochromism-corrected measurement mode, the processing unit (3) is configured to access thermochromism reference data, in particular thermochromism reference data that has been acquired using a spectrophotometer (1) according to any one of claims 1-3, and to calculate a thermochromism-corrected sample reflectance profile for the measurement sample (S) based on the sample temperature, the wavelength-dependent sample reflectance profile obtained by the sample measurement light detection unit (4), and the thermochromism reference data.

5. The spectrophotometer (1) of claim 3 or 4, wherein in the thermochromism-corrected measurement mode, the processing unit (3) is further configured to calculate a color difference between a sample color derived from the wavelength-dependent sample reflectance profile obtained by the sample measurement light detection unit (4), and a reference color, wherein either the sample color or the reference color have been corrected based on the thermochromism reference data and the sample temperate, and to output a color difference warning signal via the user interface (8) if the color difference exceeds a pre-determined color difference threshold.

6. The spectrophotometer (1) of any one of the preceding claims, wherein the processing unit (3) is further configured to be switchable to a non-corrected measurement mode for measuring a measurement sample (S), in which the processing unit (3) is configured to output the wavelength-dependent sample reflectance profile obtained by the sample measurement light detection unit (4) without taking into account the sample temperature.

7. The spectrophotometer (1) of claim 6, wherein in the non-corrected measurement, the processing unit (3) is further configured to output an activation warning signal via the user interface (8) to indicate that thermochromism correction is not activated.

8. The spectrophotometer (1) of claim 6 or 7, wherein in the non-corrected measurement mode, the processing unit (3) is further configured to:
a) access a prediction model that is based on thermochromism reference data, in particular based on thermochromism reference data that has been acquired using a spectrophotometer (1) according to any one of claims 1-3,
predict that the measurement sample (S) is thermochromic based on the wavelength-dependent sample reflectance profile of the measurement sample and the prediction model, and
output a thermochromism warning signal via the user interface (8) to indicate that the measurement sample (S) is thermochromic, and/or
b) predict that the measurement sample (S) is thermochromic based on color coordinates derived from the wavelength-dependent sample reflectance profile of the measurement sample (S), and
output a thermochromism warning signal via the user interface (8) to indicate that the measurement sample (S) is thermochromic.

9. The spectrophotometer (1) of any one of the preceding claims,
wherein the spectrophotometer (1) comprises an enclosure (2) which defines a sample port (21) with a sample aperture (A) through which the sample (S) can be illuminated when the spectrophotometer (1) is placed on the sample (S);
wherein the temperature sensing device is a thermal infrared sensor device (5) having a field-of-view which covers at least a portion of the sample aperture, wherein the thermal infrared sensor device (5) is configured to output an output signal that depends on a surface temperature of a surface that is within its field-of-view,
wherein the processing unit (3) is configured to derive the sample temperature from the output signal of the thermal infrared sensor device (5), and
wherein the thermal infrared sensor device (5) is thermally connected to a portion of the enclosure (2) which surrounds the sample aperture (A) so as to be in thermal equilibrium with the portion of the enclosure (2) surrounding the sample aperture (A).

10. A spectrophotometer (1) comprising:
a sample illumination light source (10, 10', 10") configured to emit sample measurement light;
an enclosure (2) which defines a sample port (21) with a sample aperture through which the sample can be illuminated when the spectrophotometer (1) is placed on the sample (S);
a sample measurement light detection unit (4) for obtaining a wavelength-dependent sample reflectance profile based on a portion of the sample measurement light reflected from the sample (S);
a thermal infrared sensor device (5) having a field-of-view which covers at least a portion of the sample aperture (A), wherein the thermal infrared sensor device (5) is configured to output an output signal that depends on a surface temperature of a surface that is within its field-of-view;
a processing unit (3) configured to derive a sample temperature from the output signal of the thermal infrared sensor device (5),
wherein the thermal infrared sensor device (5) is thermally connected to a portion of the enclosure (2) which surrounds the sample aperture (A) so as to be in thermal equilibrium with the portion of the enclosure (2) surrounding the sample aperture (A).

11. The spectrophotometer (1) of claim 9 or 10, further comprising a port reducer (61), which is placeable at the sample port (21) to reduce an aperture size of the sample aperture (A), wherein the port reducer (61) exhibits an emissivity which is preferably smaller than 0.2, in particular wherein the port reducer (61) is at least partially made of a polished metal, preferably polished stainless steel.

12. The spectrophotometer (1) of any one of claims 9 to 11, further comprising an insulation structure (7) that is arranged at the sample port (21) to minimize heat exchange between the spectrophotometer (1) and the sample (S).

13. The spectrophotometer (1) of any one of claims 9 to 12,
wherein the thermal infrared sensor device (5) defines a measurement axis which traverses a cavity defined by the enclosure (2) and forms a temperature measurement angle (αₜₑₘₚ) with respect to a device normal (N) that is perpendicular to the sample aperture (A),
wherein the enclosure (2) does not have any holes arranged under an angle (-αₜₑₘₚ) that is equal but opposite to the temperature measurement angle with respect to the device normal (N), and
wherein the thermal infrared sensor device (5) is thermally connected to a portion of the enclosure (2) which surrounds the angle (-αₜₑₘₚ) that is equal but opposite to the temperature measurement angle (αₜₑₘₚ) so as to be in thermal equilibrium with said the portion of the enclosure (2).

14. The spectrophotometer (1) of any one of claims 9 to 13, wherein the enclosure (2) is an integrating sphere for diffusing the sample measurement light.

15. A measurement setup comprising:
a spectrophotometer (1) according to any one of the preceding claims having an acquisition rate at which wavelength-dependent sample reflectance profiles can be acquired, and
a sample holder (SH), wherein the sample holder exhibits a thermal mass and a thermal resistance defined such that the temperature of the sample (S) between each acquisition at the acquisition rate changes by less than 15°C.

16. A color measurement network system comprising:
at least one spectrophotometer (1) according to any one of claims 1 to 14, and
a cloud server (360) comprising a cloud database (361) for storing thermochromism reference data,
wherein each spectrophotometer (1) is connectable to the cloud server (360) to upload thermochromism reference data into the cloud database (361) and/or to download thermochromism reference data from the cloud database (361).

17. A calibration method for temperature-calibration of a spectrophotometer (1) according to any one of claims 9 to 14, the calibration method comprising:
providing a first calibration sample with a pre-determined emissivity and a pre-determined first surface temperature;
obtaining a measured first surface temperature of the calibration sample with the thermal infrared sensor device (5) of the spectrophotometer (1);
calculating a fraction of the field-of-view of the thermal infrared sensor device (5) of the spectrophotometer (1) that overlaps with the sample aperture (A) based on the measured first surface temperature, the pre-determined first surface temperature of the calibration sample and the pre-determined emissivity of the calibration sample.

18. The calibration method of claim 17, further comprising:
providing a second calibration sample with a pre-determined emissivity and a pre-determined second surface temperature or setting the first calibration sample to a pre-determined second surface temperature;
obtaining a measured second surface temperature of the calibration sample with the thermal infrared sensor device (5) of the spectrophotometer (1), wherein the measured second surface temperature is obtained by taking into account the calculated fraction of the field-of-view that overlaps with the sample aperture;
calculating a temperature offset between the pre-determined second temperature and the measured second surface temperature.
